# EUROPEAN PATENT APPLICATION

(11) **EP 3 709 231 A1**
(43) Date of publication of application: **16.09.2020**
(21) Application number: 20162590.2
(22) Date of filing: 12.03.2020
(51) Int. Cl.: G06Q 10/00, G06Q 10/04, G01C 21/34

(54) **VEHICLE TRACK PLANNING METHOD, DEVICE, COMPUTER DEVICE AND COMPUTER-READABLE STORAGE MEDIUM**

(30) Priority: 12.03.2019 CN 201910185812
(71) Applicant: BEIJING BAIDU NETCOM SCIENCE AND TECHNOLOGY CO. LTD., 100085 Beijing (CN)
(72) Inventor: XIA, Zhongpu, BEIJING, 100085 (CN); PAN, Yifeng, BEIJING, 100085 (CN)
(74) Representative: Bittner, Bernhard

(57) **Abstract**

A vehicle track planning method, device are provided according to the present disclosure. The method includes: dividing a road scene from an origin to a destination into a plurality of grids, wherein a grid with an obstacle and a grid without obstacle are identified with respective scene information; constructing a plurality of functions B = f (A, W) of the scene information A for identifying a grid and a planning strategy B, wherein W represents a neural network model W, and the planning strategy B comprises information of each position point in the grids through which a planning path from the origin to the destination passes; fitting the plurality of constructed planning functions B = f (A, W) to obtain the neural network model W; and obtaining a planning track from the origin to the destination according to the neural network model W.

## Description

### TECHNICAL FIELD

The present application relates to a field of motor vehicle driving technology, and in particular, to a vehicle track planning method, device, computer device and a computer-readable storage medium.

### BACKGROUND

In the existing technology, in an unmanned vehicle planning algorithm, sampling is performed by traversing a state space according to a current road scene of the unmanned vehicle, so that an optimal track is selected according to an evaluation function. The existing unmanned vehicle track planning technology has the following disadvantages. Firstly, the sampling needs to be performed by traversing again for the previously experienced scenes, which results in a waste of computing resources and affects a real-time performance of an in-vehicle system. Secondly, the evaluation function is selected based on experiences, so that it is difficult to consider the comfort and safety of driving.

Therefore, there is an urgent need in the existing technology to improve the unmanned vehicle planning algorithm.

### SUMMARY

A vehicle track planning method and device are provided according to embodiments of the present application, so as to at least solve the above technical problems in the existing technology.

According to a first aspect of the application, a vehicle track planning method includes:
dividing a road scene from an origin to a destination into a plurality of grids, wherein a grid with an obstacle and a grid without obstacle are identified with respective scene information;
constructing a plurality of functions B = f(A, W) of the scene information A for identifying a grid and a planning strategy B, wherein W represents a neural network model W, and the planning strategy B comprises information of each position point in the grids through which a planning path from the origin to the destination passes;
fitting the plurality of constructed planning functions B = f(A, W) to obtain the neural network model W; and
obtaining a planning track from the origin to the destination according to the neural network model W.

In an embodiment of the application, the dividing a road scene from an origin to a destination into a plurality of grids comprises: numbering each of the plurality of grids.

In an embodiment of the application, a grid with an obstacle and a grid without obstacle are identified with respective scene information by: identifying the grid with the obstacle by scene information comprising a type and a state of the obstacle, and identifying the grid without obstacle by identical scene information.

In an embodiment of the application, the constructing a plurality of functions B = f(A, W) of the scene information A identifying a grid and a planning strategy B includes:

for each grid through which a planning path from the origin to the destination passes, constructing a function B = f(A, W) of the scene information A identifying the grid and the planning strategy B according to a specific condition.

In an embodiment of the application, the specific condition comprises a shortest time, a shortest distance, an expressway priority, and/or avoidance of congestion.

In an embodiment of the application, the information of each position point in the grids through which a planning path from the origin to the destination passes comprises:
an abscissa and an ordinate of a specific point in the grid.

According to a second aspect of the application, a vehicle track planning device includes:
a gridding module configured to divide a road scene from an origin to a destination into a plurality of grids, wherein a grid with an obstacle and a grid without obstacle are identified with respective scene information;
a constructing module configured to construct a plurality of functions B = f(A, W) of the scene information A for identifying a grid and a planning strategy B, wherein W represents a neural network model W, and the planning strategy B comprises information of each position point in the grids through which a planning path from the origin to the destination passes;
a fitting module configured to fit the plurality of constructed planning functions B = f(A, W) to obtain the neural network model W; and
a planning module configured to obtain a planning track from the origin to the destination according to the neural network model W.

In an embodiment of the application, a road scene from an origin to a destination being divided into a plurality of grids includes: numbering each of the plurality of grids.

In an embodiment of the application, a grid with an obstacle and a grid without obstacle are identified with respective scene information by: identifying the grid with the obstacle by scene information comprising a type and a state of the obstacle, and identifying the grid without obstacle by identical scene information.

In an embodiment of the application, a plurality of functions B = f(A, W) of the scene information A identifying a grid and a planning strategy B is constructed by: for each grid through which a planning path from the origin to the destination passes, constructing a function B = f(A, W) of the scene information A identifying the grid and the planning strategy B according to a specific condition.

In an embodiment of the application, the specific condition comprises a shortest time, a shortest distance, an expressway priority, and/or avoidance of congestion.

In an embodiment of the application, the information of each position point in the grids through which a planning path from the origin to the destination passes comprises:
an abscissa and an ordinate of a specific point in the grid.

In a third aspect, a computer device is provided, the computer device including:
one or more processors;
and a storage device configured for storing one or more programs;
wherein the one or more programs are executed by the one or more processors to enable the one or more processors to implement the above method.

In a fourth aspect, a computer-readable storage medium is provided for storing computer software instructions which is executed by a processor to implement the above method.

With the vehicle track planning method and device of the present application, it is not necessary to performing re-traversing and sampling for scenes that have been passed during previous manual driving, thereby avoiding the waste of computing resources, ensuring the real-time performance of an in-vehicle system and ensuring driving comfort and safety. The technical solutions provided in the various embodiments of the present application can be applied to the unmanned vehicle and the manual driving.

The above summary is for the purpose of the specification only and is not intended to be limiting in any way. In addition to the illustrative aspects, embodiments, and features described above, further aspects, embodiments, and features of the present application will be readily understood by reference to the drawings and the following detailed description.

### BRIEF DESCRIPTION OF THE DRAWINGS

In the drawings, unless otherwise specified, identical reference numerals will be used throughout the drawings to refer to identical or similar parts or elements. The drawings are not necessarily drawn to scale. It should be understood that these drawings depict only some embodiments disclosed according to the present application and are not to be considered as limiting the scope of the present application.
FIG. 1 is a flowchart of a vehicle track planning method according to an embodiment of a first aspect of the present application;
FIG. 2 is a flowchart for identifying a grid according to an embodiment of the first aspect of the present application;
FIG. 3 is a flowchart of a method for constructing a function B = f(A, W) of the scene information A for identifying a grid and a planning strategy B according to an embodiment of the first aspect of the present application;
FIG. 4 is a schematic diagram of a plurality of planning tracks according to an embodiment of the first aspect of the present application;
FIG. 5 is a schematic diagram of a specific condition according to an embodiment of the first aspect of the present application;
FIG. 6 is a schematic diagram of the information of each position point in the grids through which a planning path from the origin to the destination passes according to an embodiment of the first aspect of the present application;
FIG. 7 is a schematic diagram of a vehicle track planning device according to an embodiment of a second aspect of the present application; and
FIG. 8 is a schematic block diagram of a computer device according to an embodiment of the present application.

### DETAILED DESCRIPTION OF THE EMBODIMENTS

In the following, only certain exemplary embodiments are briefly described. As those skilled in the art would realize, the described embodiments may be modified in various different ways, all without departing from the spirit or scope of the present application. Accordingly, the drawings and description are to be regarded as illustrative in nature and not restrictive.

In the description of the embodiments of the present disclosure, the term "including" and similar terms thereof shall be understood as open inclusion, i.e., "including, but not limited to". The term "according to" should be understood as "based at least in part on". The term "an embodiment" or "the embodiment" should be understood as "at least one embodiment". Other explicit and implicit definitions may also be included below.

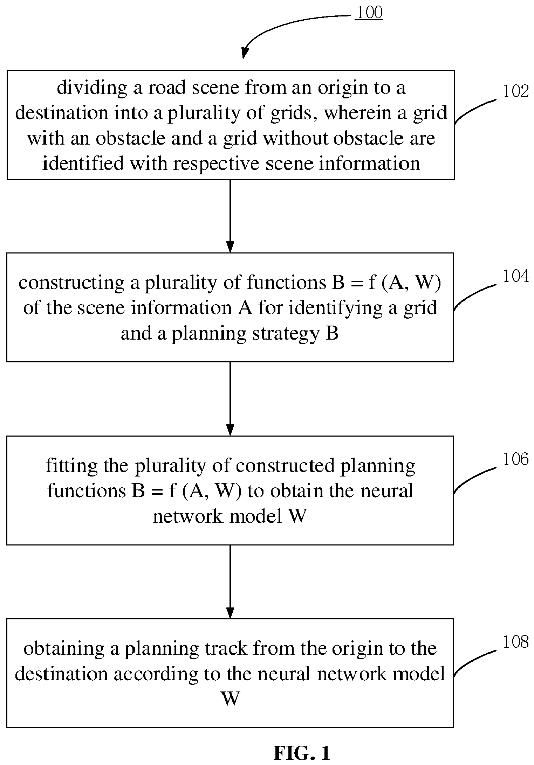

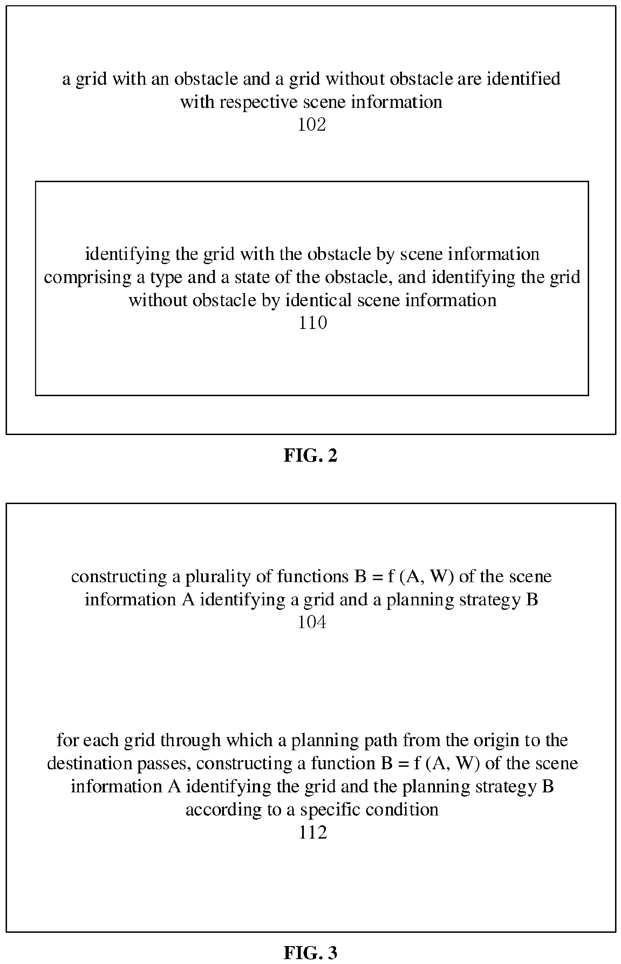

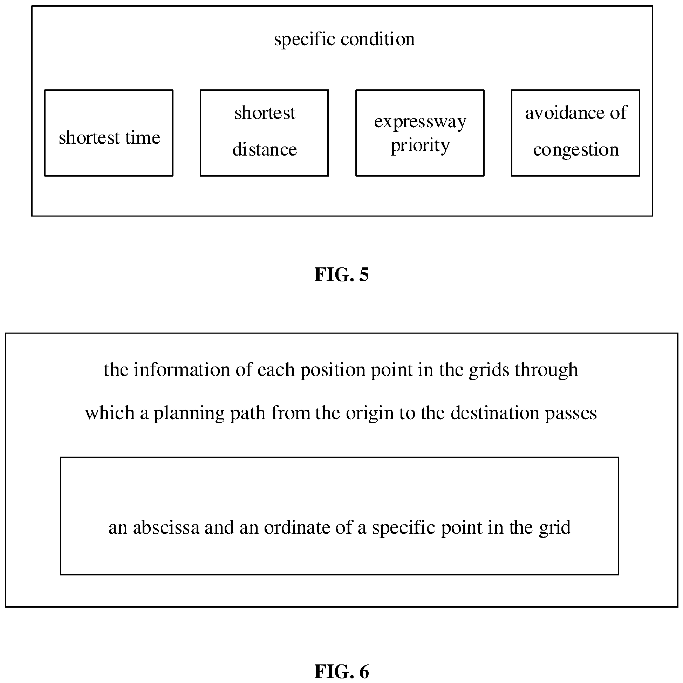

The following is described in detail with reference to FIGs. 1-8 of the present application.

FIG. 1 is a flowchart of a vehicle track planning method 100 according to an embodiment of the first aspect of the present application, which may include the following steps 102 to 108:

In step 102, a road scene from an origin to a destination is divided into a plurality of grids, wherein a grid with an obstacle and a grid without obstacle are identified with respective scene information.

In step 104, a plurality of functions B = f(A, W) of the scene information A for identifying a grid and a planning strategy B is constructed, wherein W represents a neural network model W, and the planning strategy B comprises information of each position point in the grids through which a planning path from the origin to the destination passes.

In step 106, the plurality of constructed planning functions B = f(A, W) are fitted to obtain the neural network model W.

In step 108, a planning track from the origin to the destination is obtained according to the neural network model W.

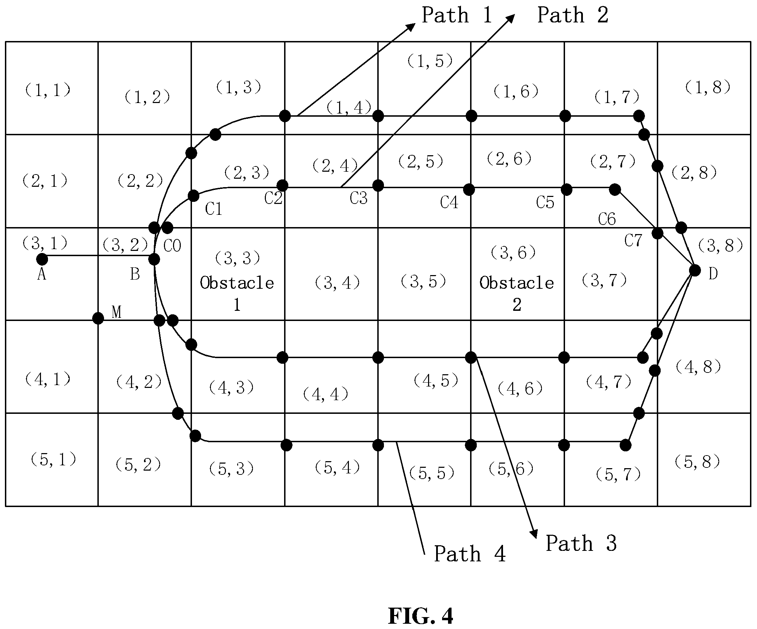

In one embodiment, the road scene from the origin A to the destination D is divided into a plurality of grids, and each grid is numbered, as shown in FIG. 4.

As shown in FIG. 4, the road scene from the origin A to the destination D is divided into 5^{∗}8 grids. For example, the numbers of the grids are simply shown in FIG. 4. The 5^{∗}8 grids are numbered as:
(1, 1), (1, 2), (1, 3), (1, 4), (1, 5), (1, 6), (1, 7), (1, 8);
(2, 1), (2, 2), (2, 3), (2, 4), (2, 5), (2, 6), (2, 7), (2, 8);
(3, 1), (3, 2), (3, 3), (3, 4), (3, 5), (3, 6), (3, 7), (3, 8);
(4, 1), (4, 2), (4, 3), (4, 4), (4, 5), (4, 6), (4, 7), (4, 8);
(5, 1), (5, 2), (5, 3), (5, 4), (5, 5), (5, 6), (5, 7), (5, 8).

Four possible paths from the origin A to the destination D are shown in FIG. 4, namely path 1, path 2, path 3, and path 4. The vehicle can start from the origin A to the destination D through any one of the four paths. Two of the grids include obstacles, i.e., the grid (3, 3) includes an obstacle 1 and the grid (3, 6) includes an obstacle 2. The obstacle here may be a car that is driving in front of the current vehicle, or the obstacle may be caused by road construction, and the like. It is assumed that areas in which the obstacle 1 and the obstacle 2 are located cannot be bypassed due to a size of a grid in the dividing, then it is necessary to avoid these areas. The 5^{∗}8 grids shown herein are merely illustrative and any suitable division can be performed, which should be understood by those skilled in the art.

In one embodiment, as mentioned in step 102, step 102 may include step 110:

In step 110, the grid with the obstacle is identified by scene information comprising a type and a state of the obstacle, and the grid without obstacle is identified by identical scene information. For example, if the grid is identified with the scene information such as the type and state of the obstacle, wherein the type of the obstacle 1 is a vehicle, and the state of the obstacle 1 is moving or stationary; the type of the obstacle 2 is a construction mound, and the state of the obstacle 2 is stationary, such that the obstacles can be distinguished from each other. In addition, as shown in FIG. 4, the grid containing no obstacles is identified with identical scene information. For example, in addition to the grid (3, 3), (3, 6), other grids are identified with identical scene information as being passable, for example, the grids (1, 1), (1, 2), (2, 1), (2, 2), ... , (4, 7), (4, 8), (5, 7), (5, 8) are all identified with being unblocked.

In one embodiment, a mentioned in step 104, the constructing a plurality of functions B = f (A, W) of the scene information A identifying a grid and a planning strategy B may include:

for each grid through which a planning path from the origin to the destination passes, constructing a function B = f(A, W) of the scene information A identifying the grid and the planning strategy B according to a specific condition.

For example, a mapping of the grid (represented with the scene information A) to the planning path function B can be obtained by learning according to a specific neural network model W.

For example, in B₁ = f(A₁, W), B₁ represents the function for a planning strategy from the origin A to the point B in the grid (3, 2), A₁ represents the scene information for the point B, i.e., the scene information from the origin A to the point B, and W represents the neural network model. In particular, in this case, the scene information represents an unblocked path from the origin A to the point B in the grid (3, 2), that is, there is no obstacle in this path.

As shown in FIG. 4, the origin A is in the grid (3, 1), and the destination D is in the grid (3, 8); the obstacle 1 is in the grid (3, 3), and the obstacle 2 is in the grid (3, 6). A black dot "•" in Fig. 4 represents a point to be passed, such as the points of A, B, C0, C1, C2, C3, C4, C5, C7 and D shown on the path 2 in FIG. 4, which will be described below.

When the vehicle starts from the origin A, a path from the grid (3, 1) of the origin to the next grid is calculated. For example, for B₁ = f(A₁, W), the grid (3, 2) can be selected as the next grid according to a specific condition, and specifically, the point B in the grid (3, 2) can be selected. For example, the factors may be a shortest time, a shortest distance, an expressway priority, and/or avoidance of congestion. As mentioned above, A₁ represents the scene information from the origin A to the point B, and B₁ indicates the planning strategy from the origin A to the point B.

When the vehicle is about to reach point B in the grid (3, 2), it is necessary to bypass the obstacle 1. For example, any one of the path 1, path 2, path 3, path 4 may be selected through the planning strategy B₂ = f(A₂, W). For example, the path 2 may be selected according to a factor such as the shortest time.

In the case of selecting path 2, for example, through the planning strategy B₂= f (A₂, W), the point C0 at an edge of the grid (2, 2) is selected as the next point according to a factor such as the shortest time. A₂ represents the scene information from the point B to the point C0, and B₂ represents the planning strategy from the point B to the point C0.

When the vehicle is about to reach the point C0 at the edge of the grid (2, 2), for example, through the planning strategy B₃ = f(A₃, W), the point C1 at an edge of the grid (2, 3) is selected as the next point according to a factor such as the shortest time. A3 represents the scene information from the point C0 to the point C1, and B₃ represents the planning strategy from the point C0 to the point C1.

When the vehicle is about to reach the point C1 at the edge of the grid (2, 3), for example, through the planning strategy B₄ = f(A₄, W), the point C2 at an edge of the grid (2, 4) is selected as the next point according to a factor such as the shortest time. A₄ represents the scene information from the point C1 to the point C2, and B₄ represents the planning strategy from the point C1 to the point C2.

When the vehicle is about to reach the point C2 at the edge of the grid (2, 4), for example, through the planning strategy B₅ = f(A₅, W), the point C3 at an edge of the grid (2, 5) is selected as the next point according to a factor such as the shortest time. As represents the scene information from the point C2 to the point C3, and B₅ represents the planning strategy from the point C2 to the point C3.

When the vehicle is about to reach the point C3 at the edge of the grid (2, 5), for example, through the planning strategy B₆ = f(A₆, W), the point C4 at an edge of the grid (2, 6) is selected as the next point according to a factor such as the shortest time. A₆ represents the scene information from the point C3 to the point C4, and B₆ represents the planning strategy from the point C3 to the point C4.

When the vehicle is about to reach the point C4 at the edge of the grid (2, 6), for example, through the planning strategy B₇ = f(A₇, W), the point C5 at an edge of the grid (2, 7) is selected as the next point according to a factor such as the shortest time. A₇ represents the scene information from the point C4 to the point C5, and B₇ represents the planning strategy from the point C4 to the point C5.

When the vehicle is about to reach the point C5 at the edge of the grid (2, 7), for example, through the planning strategy B₈ = f(As, W), the point C6 inside the grid (2, 7) is selected as the next point according to a factor such as the shortest time. A₈ represents the scene information from the point C5 to the point C6, and B₈ represents the planning strategy from the point C5 to the point C6.

When the vehicle is about to reach the point C6 inside the grid (2, 7), for example, through the planning strategy B₉ = f(A₉, W), the point C7 at an edge of the grid (3, 7) is selected as the next point according to a factor such as the shortest time. A₉ represents the scene information from the point C6 to the point C7, and B₉ represents the planning strategy from the point C6 to the point C7.

When the vehicle is about to reach the point C7 at the edge of the grid (3, 7), for example, through the planning strategy B₁₀ = f(A₁₀, W), the point D inside the grid (3, 8) (i.e., the destination) is selected as the next point according to a factor such as the shortest time. A₁₀ represents the scene information from the point C7 to the point D, and B₁₀ represents the planning strategy from the point C7 to the point D.

It should be noted that the path 2 as selected above is only an example, and is the path obtained according to a condition of the shortest time.

Alternatively, the path 3 from the origin A to the destination D may be selected as the planning strategy, since the path 3 meets the specific condition of the shortest distance among all of the paths.

Alternatively, the path 1 from the origin A to the destination D may be selected as the planning strategy, since the path 1 meets the specific condition of an expressway priority among all of the paths.

Alternatively, the path 4 from the origin A to the destination D may be selected as the planning strategy, since the path 4 meets the specific condition of avoidance of congestion among all of the paths.

In the case of selecting the paths 3, 1, 4, and the like, a similar mapping operation will also be performed as described above, and the vehicle finally reaches the grid (3, 8) where the destination D point is located.

It should be noted that the grid division shown in FIG. 4 is merely illustrative, and there may be multiple paths from the origin A to the destination D. Similar mapping and calculation are required according to each path (due to each or several conditions).

In an embodiment of the present application, as mentioned in step 104, the information of each position point in the grids through which a planning path from the origin to the destination passes includes: an abscissa and an ordinate of a specific point in the grid, particularly an abscissa and an ordinate of a specific point in the grid relative to a preset origin in the grid.

For example, when the vehicle starts from the grid (3, 1) where the origin A is located, the planning strategy B₁ contains the position information of the points in the grid (3, 2) where the vehicle reaches. For example, the position information (ΔX₁, ΔY₁) of the point B when the vehicle reaches the point B in the grid (3, 2).ΔX₁ represents the distance of the point B from a point M (the point M is assumed to be the origin) on the abscissa, ΔY₁ represents the distance of the point B from the point M (the point M is assumed to be the origin) on the ordinate, and the point M is at a lower left corner of the grid (3, 2). Similarly, it is assumed that a point at lower left corner of each grid is the origin for the grid (not shown). For example, shown in FIG. 4, the point M at the lower left corner of the grid (3, 2) is the origin of the grid (3, 2).

In the case of selecting the path 2, as mentioned above, through the planning strategy B₂ = f (A₂, W), the point C0 at the edge of the grid (2, 2) is selected as the next point according to a factor such as the shortest time. The planning strategy provided in this case contains the point of the grid (the point C0 at the edge of the grid (2, 2)) that is about to be reached in the grid and the position information (ΔX₂, ΔY₂) of the point C0.

When the vehicle is about to reach the point C0 at the edge of the grid (2, 2), for example, through the planning strategy B₃ = f(A₃, W), the point C1 at the edge of the grid (2, 3) is selected as the next point according to a factor such as the shortest time. The planning strategy provided in this case contains the point of the grid (the point C1 at the edge of the grid (2, 3)) that is about to be reached and the position information (ΔX₃, ΔY₃) of the point C1.

When the vehicle is about to reach the point C1 at the edge of the grid (2, 3), for example, through the planning strategy B₄ = f(A₄, W), the point C2 at the edge of the grid (2, 4) is selected as the next point according to a factor such as the shortest time. The planning strategy provided in this case contains the point of the grid (the point C2 at the edge of the grid (2, 4)) that is about to be reached and the position information (ΔX₄, ΔY₄) of the point C2.

When the vehicle is about to reach the point C2 at the edge of the grid (2, 4), for example, through the planning strategy B₅ = f(A₅, W), the point C3 at the edge of the grid (2, 5) is selected as the next point according to a factor such as the shortest time. The planning strategy provided in this case contains the point of the grid (the point C3 at the edge of the grid (2, 5)) that is about to be reached and the position information (ΔX₅, ΔY₅) of the point C3.

When the vehicle is about to reach the point C3 at the edge of the grid (2, 5), for example, through the planning strategy B₆= f(A₆, W), the point C4 at the edge of the grid (2, 6) is selected as the next point according to a factor such as the shortest time. The planning strategy provided in this case contains the point of the grid (the point C4 at the edge of the grid (2, 6)) that is about to be reached and the position information (ΔX₆, ΔY₆) of the point C4.

When the vehicle is about to reach the point C4 at the edge of the grid (2, 6), for example, through the planning strategy B₇ = f(A₇, W), the point C5 at the edge of the grid (2, 7) is selected as the next point according to a factor such as the shortest time. The planning strategy provided in this case contains the point of the grid (the point C5 at the edge of the grid (2, 7)) that is about to be reached and the position information (ΔX₇, ΔY₇) of the point C5.

When the vehicle is about to reach the point C5 at the edge of the grid (2, 7), for example, through the planning strategy B₈ = f(A₈, W), the point C6 at the edge of the grid (2, 7) is selected as the next point according to a factor such as the shortest time. The planning strategy provided in this case contains the point of the grid (the point C6 inside the grid (2, 7)) that is about to be reached and the position information (ΔX₈, ΔY₈) of the point C6.

When the vehicle is about to reach the point C6 inside the grid (2, 7), for example, through the planning strategy B₉ = f(A₉, W), the point C7 at the edge of the grid (3, 7) is selected as the next point according to a factor such as the shortest time. The planning strategy provided in this case contains the point of the grid (the point C7 at the edge of the grid (2, 9)) that is about to be reached and the position information (ΔX₉, ΔY₉) of the point C7.

When the vehicle is about to reach the point C7 point at the edge of the grid (3, 7), for example, through the planning strategy B₁₀ = f(A₁₀, W), the point D (i.e., the destination) inside the grid (3, 8) is selected as the next point according to a factor such as the shortest time. The planning strategy provided in this case contains the point of the grid (the point D inside the grid (3, 8)) that is about to be reached and the position information (ΔX₁₀, ΔY₁₀) of the point D.

In the case of selecting the paths 3, 1, 4, and the like, similar calculations will be performed, and the vehicle finally reaches the point D in the grid (3, 8) where the destination D is located, thereby obtaining multiple position points that is about to be reached in the grid and the position information thereof.

It should also be noted that the term "position information" mentioned in various embodiments of the present application includes information on a probability of selecting the position. For example, there is a straight line between the point C6 and the destination D in FIG. 4, which includes the point C7 to be passed. Alternatively, there may be also an arc or other shaped path between the point C6 and the destination D. In this case, the C7 point may not be selected as the point to be passed. Therefore, the information on a probability of each position point as selected is included in each selection step, which will be understood by those skilled in the art.

In one embodiment, as mentioned in step 106, by fitting the plurality of functions B = f (A, W), the neural network model W can be obtained.

For example, after processing is performed based on the data obtained above, a large amount of data for the functions (or called identified data) between each grid (the scene information A) and the planning strategy B (B₁, B₂, B₃, B₄, ..., Bₙ) are generated. For example, in the case of selecting the path 2, the following functions are obtained:
B₁= f(A₁,W),
B₂= f(A₂,W),
B₃= f(A₃,W),
......
Bn= f(Aₙ,W);
For example, in the case of selecting the path 3, the following functions are obtained:
B₁' = f(A₁',W),
B₂' = f(A₂',W),
B₃' = f(A₃',W),
......
Bn' = f(Aₙ',W);
For example, in the case of selecting the path 1, the following functions are obtained:
B₁" = f(A₁",W),
B₂" = f(A₂",W),
B₃" = f(A₃",W),
......
Bₙ" = f(An",W);
For example, in the case of selecting the path 1, the following functions are obtained:
B₁'" = f(A₁'",W),
B₂'" = f(A₂'",W),
B₃'" = f(A₃'",W),
......
Bₙ'" = f(Aₙ'",W);
and the like.

Therefore, the neural network model W can be o fitted based on the above-mentioned functions.

In one embodiment, as mentioned at step 108, according to the neural network model W, a planning track from the origin A to the destination D is obtained.

For example, according to the fitted neural network model W, after inputting the information of the origin A and the destination D, the path 2 (the path 2 meets the condition of the shortest time) may be recommended as the planning track from the origin A to the destination D with the neural network model W.

Alternatively, the path 3 (the path 3 meets the condition of the shortest distance) may be recommended as the planning track from the origin A to the destination D with the neural network model W.

Alternatively, the path 1 (the path 1 meets the condition of an expressway priority) may be recommended as the planning track from the origin A to the destination D with the neural network model W.

Alternatively, the path 4 (the path 4 meets the condition of avoidance of congestion) may be recommended as the planning track from the origin A to the destination D with the neural network model W.

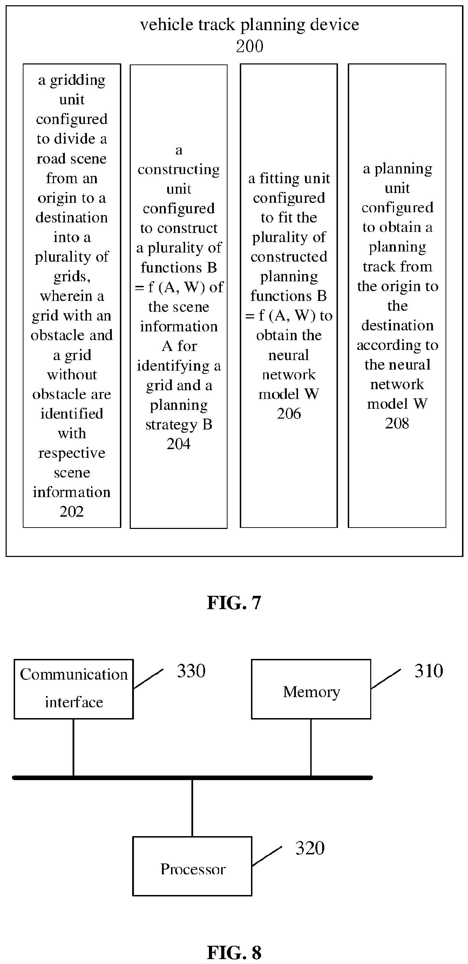

FIG. 7 is a schematic diagram of a vehicle track planning device 200 according to an embodiment of a second aspect of the present application, including:
a gridding unit 202 configured to divide a road scene from an origin to a destination into a plurality of grids, wherein a grid with an obstacle and a grid without obstacle are identified with respective scene information;
a constructing unit 204 configured to construct a plurality of functions B = f (A, W) of the scene information A for identifying a grid and a planning strategy B, wherein W represents a neural network model W, and the planning strategy B comprises information of each position point in the grids through which a planning path from the origin to the destination passes;
a fitting unit 206 configured to fit the plurality of constructed planning functions B = f (A, W) to obtain the neural network model W; and
a planning unit 208 configured to obtain a planning track from the origin to the destination according to the neural network model W.

In an embodiment of the application, a road scene from an origin to a destination being divided into a plurality of grids includes: numbering each of the plurality of grids.

In one embodiment of the application, a grid with an obstacle and a grid without obstacle are identified with respective scene information by:
identifying the grid with the obstacle by scene information comprising a type and a state of the obstacle, and identifying the grid without obstacle by identical scene information.

In one embodiment of the application, a plurality of functions B = f (A, W) of the scene information A identifying a grid and a planning strategy B is constructed by:

for each grid through which a planning path from the origin to the destination passes, constructing a function B = f (A, W) of the scene information A identifying the grid and the planning strategy B according to a specific condition.

In one embodiment of the application, the specific condition comprises a shortest time, a shortest distance, an expressway priority, and/or avoidance of congestion.

In one embodiment of the application, the information of each position point in the grids through which a planning path from the origin to the destination passes includes:
an abscissa and an ordinate of a specific point in the grid.

According to an embodiment of the third aspect of the present application, a computer device is provided, which may include: one or more processors; a storage device configured to store one or more programs; the one or more programs, when executed by the one or more processors, cause the one or more processors to implement the above method.

According to an embodiment of the fourth aspect of the present application, a computer readable storage medium is provided, in which a computer program is stored, the computer program, when executed by a processor, causes the processor to implement the method described above.

FIG. 8 is a schematic block diagram of a computer device according to an embodiment of the present application, including a memory 310 and a processor 320. The memory 310 stores a computer program executable on the processor 320. When the processor 320 executes the computer program, the vehicle track planning method in the foregoing embodiment is implemented. The number of the memory 310 and the processor 320 may be one or more.

The device/apparatus/terminal/server further includes:
a communication interface 330 configured to communicate with an external device and exchange data.

The memory 310 may include a high-speed RAM memory and may also include a non-volatile memory, such as at least one magnetic disk memory.

If the memory 310, the processor 320, and the communication interface 330 are implemented independently, the memory 310, the processor 320, and the communication interface 330 may be connected to each other through a bus and communicate with one another. The bus may be an Industry Standard Architecture (ISA) bus, a Peripheral Component (PCI) bus, an Extended Industry Standard Component (EISA) bus, or the like. The bus may be divided into an address bus, a data bus, a control bus, and the like. For ease of illustration, only one bold line is shown in Figure 8, but it does not mean that there is only one bus or one type of bus.

Optionally, in a specific implementation, if the memory 310, the processor 320, and the communication interface 330 are integrated on one chip, the memory 310, the processor 320, and the communication interface 330 may implement mutual communication through an internal interface.

According to an embodiment of the present application, a computer-readable storage medium is provided for storing computer software instructions, which include programs involved in execution of the above vehicle track planning method.

In the description of the specification, the description of the terms "one embodiment," "some embodiments," "an example," "a specific example," or "some examples" and the like means the specific features, structures, materials, or characteristics described in connection with the embodiment or example are included in at least one embodiment or example of the present application. Furthermore, the specific features, structures, materials, or characteristics described may be combined in any suitable manner in any one or more of the embodiments or examples. In addition, different embodiments or examples described in this specification and features of different embodiments or examples may be incorporated and combined by those skilled in the art without mutual contradiction.

In addition, the terms "first" and "second" are used for descriptive purposes only and are not to be construed as indicating or implying relative importance or implicitly indicating the number of indicated technical features. Thus, features defining "first" and "second" may explicitly or implicitly include at least one of the features. In the description of the present application, "multiple" means two or more, unless expressly limited otherwise.

Any process or method descriptions described in flowcharts or otherwise herein may be understood as representing modules, segments or portions of code that include one or more executable instructions for implementing the steps of a particular logic function or process. The scope of the preferred embodiments of the present application includes additional implementations where the functions may not be performed in the order shown or discussed, including according to the functions involved, in substantially simultaneous or in reverse order, which should be understood by those skilled in the art to which the embodiment of the present application belongs.

Logic and/or steps, which are represented in the flowcharts or otherwise described herein, for example, may be thought of as a sequencing listing of executable instructions for implementing logic functions, which may be embodied in any computer-readable medium, for use by or in connection with an instruction execution system, device, or apparatus (such as a computer-based system, a processor-included system, or other system that fetch instructions from an instruction execution system, device, or apparatus and execute the instructions). For the purposes of this specification, a "computer-readable medium" may be any device that may contain, store, communicate, propagate, or transport the program for use by or in connection with the instruction execution system, device, or apparatus. More specific examples (not a non-exhaustive list) of the computer-readable media include the following: electrical connections (electronic devices) having one or more wires, a portable computer disk cartridge (magnetic device), random access memory (RAM), read only memory (ROM), erasable programmable read only memory (EPROM or flash memory), optical fiber devices, and portable read only memory (CDROM). In addition, the computer-readable medium may even be paper or other suitable medium upon which the program may be printed, as it may be read, for example, by optical scanning of the paper or other medium, followed by editing, interpretation or, where appropriate, process otherwise to electronically obtain the program, which is then stored in a computer memory.

It should be understood that various portions of the present application may be implemented by hardware, software, firmware, or a combination thereof. In the above embodiments, multiple steps or methods may be implemented in software or firmware stored in memory and executed by a suitable instruction execution system. For example, if implemented in hardware, as in another embodiment, they may be implemented using any one or a combination of the following techniques well known in the art: discrete logic circuits having a logic gate circuit for implementing logic functions on data signals, application specific integrated circuits with suitable combinational logic gate circuits, programmable gate arrays (PGA), field programmable gate arrays (FPGAs), and the like.

Those skilled in the art may understand that all or some of the steps carried in the methods in the foregoing embodiments may be implemented by a program instructing relevant hardware. The program may be stored in a computer-readable storage medium, and when executed, one of the steps of the method embodiment or a combination thereof is included.

In addition, each of the functional units in the embodiments of the present application may be integrated in one processing module, or each of the units may exist alone physically, or two or more units may be integrated in one module. The above-mentioned integrated module may be implemented in the form of hardware or in the form of software functional module. When the integrated module is implemented in the form of a software functional module and is sold or used as an independent product, the integrated module may also be stored in a computer-readable storage medium. The storage medium may be a read only memory, a magnetic disk, an optical disk, or the like.

The foregoing descriptions are merely specific embodiments of the present application, but not intended to limit the protection scope of the present application. Those skilled in the art may easily conceive of various changes or modifications within the technical scope disclosed herein, all these should be covered within the protection scope of the present application. Therefore, the protection scope of the present application should be subject to the protection scope of the claims.

## Claims

1. A vehicle track planning method (100), comprising:
dividing (102) a road scene from an origin to a destination into a plurality of grids, wherein a grid with an obstacle and a grid without obstacle are identified with respective scene information;
constructing (104) a plurality of functions B = f(A, W) of the scene information A for identifying a grid and a planning strategy B, wherein W represents a neural network model W, and the planning strategy B comprises information of each position point in the grids through which a planning path from the origin to the destination passes;
fitting (106) the plurality of constructed planning functions B = f(A, W) to obtain the neural network model W; and
obtaining (108) a planning track from the origin to the destination according to the neural network model W.

2. The vehicle track planning method (100) according to claim 1, wherein the dividing a road scene from an origin to a destination into a plurality of grids comprises: numbering each of the plurality of grids.

3. The vehicle track planning method (100) according to claim 2, wherein a grid with an obstacle and a grid without obstacle are identified with respective scene information (102) by:
identifying (110) the grid with the obstacle by scene information comprising a type and a state of the obstacle, and identifying the grid without obstacle by identical scene information.

4. The vehicle track planning method (100) according to claim 3, wherein the constructing (104) a plurality of functions B = f(A, W) of the scene information A identifying a grid and a planning strategy B comprises:
for each grid through which a planning path from the origin to the destination passes, constructing (112) a function B = f(A, W) of the scene information A identifying the grid and the planning strategy B according to a specific condition.

5. The vehicle track planning method (100) according to claim 4, wherein the specific condition comprises a shortest time, a shortest distance, an expressway priority, and/or avoidance of congestion.

6. The vehicle track planning method (100) according to claim 5, wherein the information of each position point in the grids through which a planning path from the origin to the destination passes comprises:
an abscissa and an ordinate of a specific point in the grid.

7. A vehicle track planning device (200), comprising:
a gridding unit (202) configured to divide a road scene from an origin to a destination into a plurality of grids, wherein a grid with an obstacle and a grid without obstacle are identified with respective scene information;
a constructing unit (204) configured to construct a plurality of functions B = f (A, W) of the scene information A for identifying a grid and a planning strategy B, wherein W represents a neural network model W, and the planning strategy B comprises information of each position point in the grids through which a planning path from the origin to the destination passes;
a fitting unit (206) configured to fit the plurality of constructed planning functions B = f (A, W) to obtain the neural network model W; and
a planning unit (208) configured to obtain a planning track from the origin to the destination according to the neural network model W.

8. The vehicle track planning device (200) according to claim 7, wherein a road scene from an origin to a destination being divided into a plurality of grids comprises: numbering each of the plurality of grids.

9. The vehicle track planning device (200) according to claim 8, wherein a grid with an obstacle and a grid without obstacle are identified with respective scene information by:
identifying the grid with the obstacle by scene information comprising a type and a state of the obstacle, and identifying the grid without obstacle by identical scene information.

10. The vehicle track planning device (200) according to claim 9, wherein a plurality of functions B = f(A, W) of the scene information A identifying a grid and a planning strategy B is constructed by:
for each grid through which a planning path from the origin to the destination passes, constructing a function B = f(A, W) of the scene information A identifying the grid and the planning strategy B according to a specific condition.

11. The vehicle track planning device (200) according to claim 10, wherein the specific condition comprises a shortest time, a shortest distance, an expressway priority, and/or avoidance of congestion.

12. The vehicle track planning device (200) according to claim 11, wherein the information of each position point in the grids through which a planning path from the origin to the destination passes comprises:
an abscissa and an ordinate of a specific point in the grid.

13. A computer device, comprising:
one or more processors; and
a storage device configured for storing one or more programs, wherein
the one or more programs are executed by the one or more processors to enable the one or more processors to implement the method according to any one of claims 1 to 6.

14. A computer-readable storage medium, in which a computer program is stored, wherein the computer program, when executed by a processor, implements the method of any one of claims 1 to 6.

15. A computer program product, comprising computer program instructions, that when executed by a processor, cause the processor to implement the method of any one of claims 1 to 6.
